(19) Europäisches Patentamt

European Patent Office

Office européen des brevets

(11) Veröffentlichungsnummer: **0 308 618 B1**

(12) **EUROPÄISCHE PATENTSCHRIFT**

(45) Veröffentlichungstag der Patentschrift: **01.04.92**

(21) Anmeldenummer: **88112004.2**

(22) Anmeldetag: **26.07.88**

(51) Int. Cl.⁵: **F16K 15/02**

(54) **Rückschlagventil, insbesondere für Druckluft.**

(30) Priorität: **24.09.87 DE 3732077**

(43) Veröffentlichungstag der Anmeldung:
**29.03.89 Patentblatt 89/13**

(45) Bekanntmachung des Hinweises auf die
Patenterteilung:
**01.04.92 Patentblatt 92/14**

(84) Benannte Vertragsstaaten:
**AT CH DE LI SE**

(56) Entgegenhaltungen:
**BE-A- 713 539      DE-C- 1 013 936
DE-U- 1 864 973      US-A- 2 547 882
US-A- 2 873 760      US-A- 3 568 711**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Haak, Wilhelm, Dipl-Ing.
Deisterstrasse 21 c
W-3015 Wennigsen 5(DE)**
Erfinder: **Röver, Gerd
Vogelkamp 12
W-3015 Wennigsen 1(DE)**
Erfinder: **Schiwik, Peter
Im kleinen Bruche 5
W-3000 Hannover 91(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung betrifft ein Rückschlagventil gemäß dem Oberbegriff des Patentanspruchs 1.

Ein derartiges Rückschlagventil ist allgemein, z.B. aus der US-A 2 547 882, bekannt. Es dient dazu, unter Druck stehende Leitungen gegen unbeabsichtigtes Entleeren zu sichern. Der Durchgang des Druckmittels ist nur in einer Richtung vorgesehen. Eine Rückströmung des Druckmittels wird durch das Rückschlagventil verhindert, das bei Druckabnahme in der Speiseleitung den Einlaß verschließt. Bei einer Druckerhöhung in der Speiseleitung gibt das durch eine Feder belastete Rückschlagventil den Weg wieder frei, so daß ein Druckausgleich erfolgen kann.

Mit strömenden Medien können, je nach Art der Betriebsbedingungen, Verunreinigungen durch das Leitungssystem transportiert werden, die schließlich an Stellen ungünstigen Strömungsverhaltens, wie z.B. im Labyrinth eines Rückschlagventils, zu Ablagerungen und damit zu Störverhalten beweglicher Ventilteile führen können. Dem wird in allgemein üblicher Weise dadurch entgegengewirkt, daß bei entsprechender Gestaltung des Rückschlagventils Passungstoleranzen von Lagerstellen und Führungen beweglicher Ventilteile, wie z.B. die des Ventilkörpers des eingangs erwähnten Rückschlagventils, mit möglichst großem Spiel ausgeführt werden.

Mit dem Vorteil einer durch die vorerwähnte Auslegung des Passungsspiels erreichbaren Minderung der Störanfälligkeit muß jedoch der Nachteil in Kauf genommen werden, daß durch unvermeidbare Verwirbelungen des strömenden Mediums innerhalb des Ventillabyrinths und durch die auf den Ventilkörper einwirkende Elastizität der Ventilfeder, der Ventilkörper leicht in eine Schwingung versetzt werden kann. Die Folge davon sind unerwünschte Ventilgeräusche, die, in Abhängigkeit von der Schwingungsfrequenz, der Strömungsgeschwindigkeit und der Formgebung des Gehäuseinnern, verschiedene Tonlagen unterschiedlicher Intensität annehmen können.

Der Erfindung liegt daher die Aufgabe zugrunde ein Rückschlagventil der eingangs genannten Art mit einfachen Mitteln so zu verbessern, daß unerwünschte Ventilgeräusche, hervorgerufen durch ein Schwingen, bzw. Vibrieren des Ventilkörpers, unter Beibehaltung eines groß ausgelegten Passungsspiel der beweglichen Ventilteile, ausgeschaltet werden.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß zur Realisierung der Erfindung, im Vergleich zu dem eingangs beschriebenen Rückschlagventil, keine zusätzlichen störanfälligen Ventilkomponenten erforderlich sind und auf aufwendige Gestaltungsmittel, wie z.B. eine strömungsgerechte Ausbildung von Ventilteilen und des Gehäuseinnern zur Herabsetzung unerwünschter Verwirbelungen des strömenden Mediums, verzichtet werden kann.

Ein weiterer Vorteil ergibt sich daraus, daß die Erfindung in vorhandene Rückschlagventile der eingangs beschriebenen Art mit relativ geringem Aufwand nachträglich eingebaut werden kann.

Die Erfindung wird anhand eines Ausführungsbeispiels, das in der Zeichnung dargestellt ist, näher erläutert.

Es zeigen:

Fig. 1
ein Rückschlagventil mit einer Ventilfeder deren Kraftwirklinie versetzt zu dem auf den Ventilkörper wirkenden Angriffspunkt der Kraftresultierenden des Druckmittels verläuft,

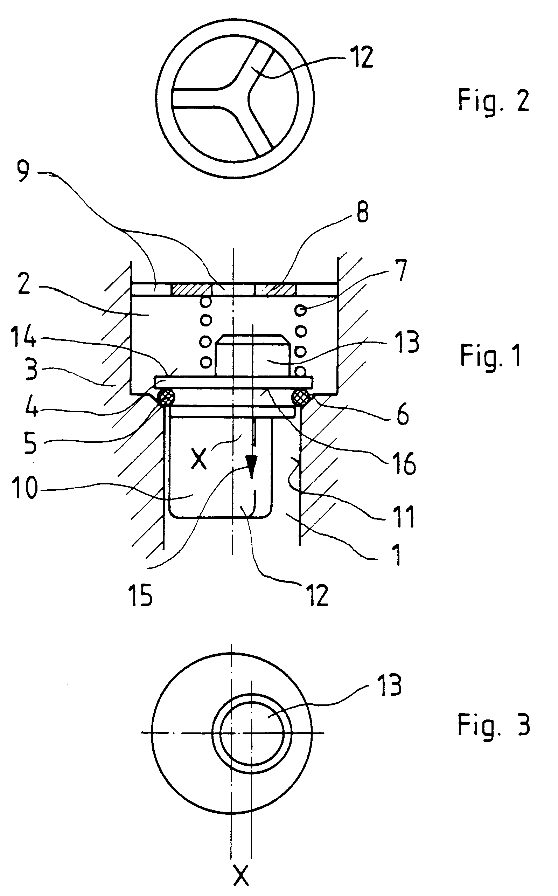

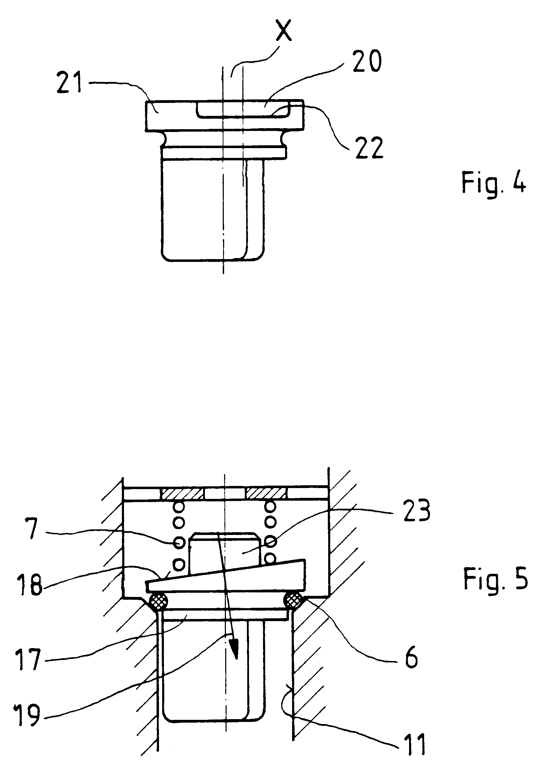

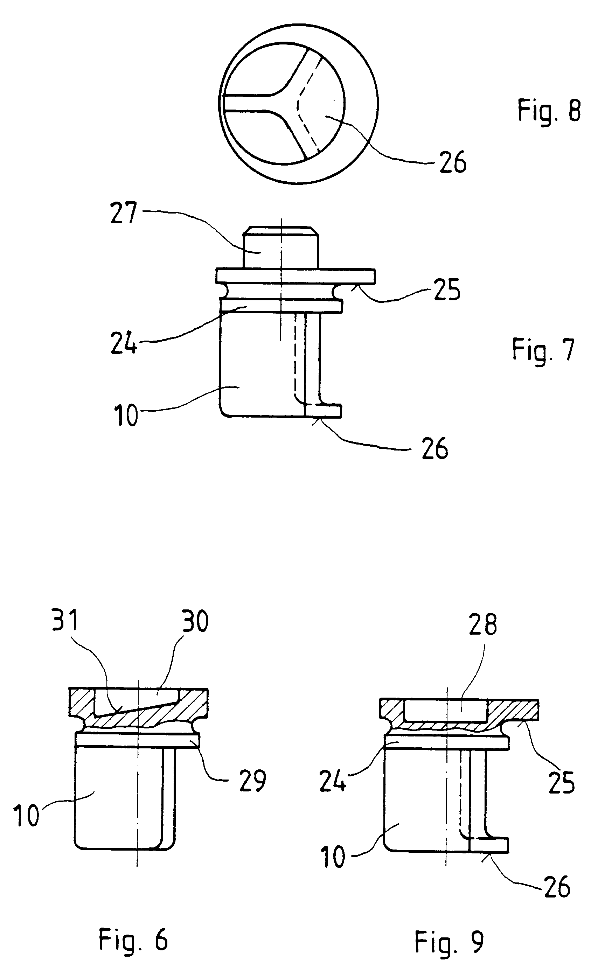

Fig. 2 und 3
je eine Ansicht des Ventilkörpers des Rückschlagventils gemäß Fig. 1,

Fig. 4
einen Ventilkörper des Rückschlagventils gemäß Fig. 1,

Fig. 5
ein Rückschlagventil gemäß Fig. 1 mit einer Ventilfeder deren Kraftwirklinie geneigt zu dem auf den Ventilkörper wirkenden Angriffspunkt der Kraftresultierenden des Druckmittels verläuft,

Fig. 6
einen Ventilkörper des Rückschlagventils gemäß Fig. 5,

Figuren 7, 8, 9
eine Variante des Ventilkörpers des Rückschlagventils gemäß Fig. 1.

Die Fig. 1 zeigt ein Rückschlagventil mit einem der Speiseleitung zugeordneten Anströmkanal (1) und einem Abströmkanal (2) die in einem in der Zeichnung angedeuteten Ventilgehäuse (3) angeordnet sind. Ein Ventilkörper (4) mit einer Dichtung (5) bildet mit einem gehäusefesten Ventilsitz (6) ein Einlaßventil (4, 6). Die Dichtung (5) kann anstelle der dargestellten Anordnung am Ventilkörper (4) auch dem Ventilsitz (6) zugeordnet sein. Es ist auch möglich, den Ventilkörper (4) oder den Ventilsitz (6) mit einer entsprechend ausgeformten Dichtfläche zu versehen, so daß die Dichtung (5) entfallen kann.

Eine Ventilfeder (7) ist abströmseitig zwischen dem Ventilkörper (4) und einer als Ventilfänger (8) ausgebildeten Wandung des Ventilgehäuses (3) angeordnet. Der Ventilkörper (4) ist durch die Kraft der sich auf den Ventilfänger (8) abstützenden Ventilfeder (7) gegen den Ventilsitz (6) vorgespannt. Der Ventilfänger (8) weist Durchlässe (9) für das strömende Medium auf.

Der Ventilkörper (4) weist einen Fortsatz (10) auf, der der Ventilfeder (7) gegenüberliegend angeordnet ist und in den Anströmkanal (1) hineinragt. Die Wandung des Anströmkanals (1), oder ein Teil davon, dient dem Ventilkörper (4) mittels Fortsatz (10) als Führungsfläche (11) in der der Ventilkörper (4) in seiner Wirkrichtung beim Öffnen und Schließen des Einlaßventils (4, 6) geführt ist. Der Fortsatz (10) ist mit Vorsprüngen (12) versehen, die zweckmäßigerweise so ausgebildet sind, daß der Durchlaß des Anströmkanals (1) nicht mehr als durch die gegebenen Führungsmittel notwendig, eingeengt ist.
(Fig. 1 und 2).

Je nach Betriebsbedingungen des Rückschlagventils ist es auch denkbar den Ventilkörper (4) mit weiteren, dem Fortsatz (10) gegenüberliegenden Vorsprüngen zu versehen, die in den Abströmkanal (2) hineinragen und dort in Verbindung mit der Wandung des Abströmkanals (2) als zusätzliche Führung des Ventilkörpers dienen würden.

Der Ventilkörper (4) weist eine Einrichtung auf, mit der die Lage der Ventilfeder (7) bezüglich des Ventilkörpers (4) fixiert ist. Diese Einrichtung besteht aus einer Stützfläche (14), die den Ventilkörper (4) zugeordnet und der Ventilfeder (7) entgegengerichtet ist, sowie aus mindestens einem auf der Stützfläche (14) angeordneten Vorsprung (13) der in die Ventilfeder (7) hineinragt.

Anstelle des Ventilkörpers (4) kann auch ein Ventilkörper (21) gemäß Fig. 4 verwendet werden. Der Ventilkörper (21) weist eine Vertiefung (20) auf in die die Ventilfeder (7) hineinragt und deren Grund als Stützfläche (22) zur Abstützung der Ventilfeder (7) dient.

Der Vorsprung (13) oder die Vertiefung (20) ist um einen Abstand (x) exzentrisch zur Längsachse des Ventilkörpers (4) angeordnet. Durch die dadurch in gleicher Weise exzentrisch zur Längsachse des Ventilkörpers (4) angeordnete Ventilfeder (7) wird bewirkt, daß die Kraftwirklinie (15) der Ventilfeder (7) um den vorerwähnten Abstand (x) versetzt zu dem auf den Ventilkörper (4) wirkenden Angriffspunkt der Kraftresultierenden des Druckmittels verläuft.
(Fig. 1, 3 und 4)

Beim Öffnen des Einlaßventils (4, 6) wirkt der Öffnungsdruck des Druckmittels auf eine Wirkfläche (16) des Ventilkörpers (4).

Dem auf den Ventilkörper (4) wirkenden Angriffspunkt der Kraftresultierenden des Druckmittels wirkt die Kraftwirklinie (15) der Ventilfeder (7), um den Abstand (x) versetzt, entgegen.

Durch ein um den Abstand (x) an den Ventilkörper (4) angreifendes Drehmoment wird der Ventilkörper (4) an die Führungsfläche (11) angepreßt und in dieser Lage bei geöffnetem Einlaßventil (4, 6) festgehalten. Hierdurch wird einem möglichen Entstehen einer Eigenfrequenz des Ventilkörpers (4), infolge der eingangs erwähnten Ursachen, entgegengewirkt.

In Fig. 5 ist im Gegensatz zu Fig. 1 die Ventilfeder (7) auf mindestens einem Vorsprung (23) konzentrisch zur Längsachse des Ventilkörpers (17) angeordnet. Die Ventilfeder (7) ist auf einer zur Längsrichtung des Ventilkörpers (17) geneigt verlaufenden Stützfläche (18) abgestützt, so daß die Kraftwirklinie (19) geneigt zu der Kraftresultierenden des Druckmittels verläuft.

Beim Öffnen des Einlaßventils (17, 6) wird durch eine in Richtung auf die Führungsfläche (11) wirksame Kraftkomponente der Kraftwirklinie (19) und dem auf den Ventilkörper (17) wirkenden Öffnungsdruck der Ventilkörper (17) einseitig an die Führungsfläche (11) angepreßt.

Bei Wegnahme der Druckbeaufschlagung wirkt auf den Ventilkörper (4, 17, 21) allein die Kraft der Ventilfeder (7), so daß der zwischen dem Ventilkörper (4, 17, 21) und der Führungsfläche (11) wirksame Anpreßdruck sich vermindert und der Ventilkörper (4, 17, 21) durch die Ventilfeder (7) in die Schließposition des Einlaßventils (4, 6; 17, 6; 21, 6) bewegt werden kann.

Fig. 6 zeigt einen Ventilkörper (29) mit einer Vertiefung (30) zur Lagefixierung der Ventilfeder (7). Die Vertiefung (30) weist eine Stützfläche (31) auf die zur Längsrichtung des Ventilkörpers (29) geneigt verläuft. Der Ventilkörper (29) kann anstelle des Ventilkörpers (17) (Fig. 5) mit gleicher Wirkung verwendet werden.

Die Figuren 7, 8 und 9 zeigen einen Ventilkörper (24) mit einer Wirkfläche (25), die zu dem Angriffspunkt der auf den Ventilkörper (24) wirkenden Kraftresultierenden des Druckmittels exzentrisch angeordnet ist. Der Ventilkörper (24) weist im Bereich des extremen Endes seines Fortsatzes (10) eine dem Druckmittel zugewandte Fläche (26) auf, die bezüglich der Wirkfläche (25) in gleicher Richtung exzentrisch zu dem auf den Ventilkörper (24) wirkenden Angriffspunkt der Kraftresultierenden des Druckmittels angeordnet ist. Es sind Führungsmittel in Form mindestens eines Vorsprungs (27) oder einer Vertiefung (28) vorgesehen, durch die die Feder (7) bezüglich des Ventilkörpers (24) so angeordnet ist, daß in der Offenstellung des Einlaßventils (24, 6) ihre Kraftwirklinie zu dem Angriffspunkt der Kraftresultierenden des Druckmittels geneigt ist.

In der Offenstellung des Einlaßventils (24, 6) ist durch die zu der Kraftresultierenden des Druckmittels geneigt verlaufende Kraftwirklinie der Ventilfeder (7) der Ventilkörper (24) an die Führungsfläche (11) angepaßt und in dieser Lage gehalten.

**Patentansprüche**

1. Rückschlagventil, insbesondere für Druckluft, mit folgenden Merkmalen:

a) Es ist ein durch einen Ventilsitz (6) und einen Ventilkörper (4, 17, 21, 24, 29) gebildetes Einlaßventil vorgesehen;

b) es sind Führungsmittel zur Führung des Ventilkörpers, bzw. eines an dem Ventilkörper befindlichen Fortsatzes vorgesehen, wobei der Ventilkörper im wesentlichen in Richtung der Längsachse des Durchlasses des Einlaßventils längsbeweglich ist;

c) es ist eine auf den Ventilkörper wirkende Ventilfeder (7) vorgesehen, durch die der Ventilkörper gegen den Ventilsitz vorgespannt ist;

gekennzeichnet durch folgende Merkmale:

d) Die Ventilfeder (7) ist bezüglich des Ventilkörpers (4, 17, 21, 24, 29) so angeordnet, daß der Angriffspunkt ihrer Kraftwirklinie am Ventilkörper zu dem Angriffspunkt der auf den Ventilkörper wirkenden Kraftresultierenden des Druckmittels versetzt ist oder daß ihre Kraftwirklinie zu der Kraftwirklinie der erwähnten Kraftresultierenden geneigt ist;

e) die Führungsmittel sind so angeordnet und ausgebildet, daß der Ventilkörper (4, 17, 21, 24, 29) bzw. der Fortsatz (10) in der Offenstellung des Einlaßventils (4, 6; 17, 6; 21, 6; 24, 6; 29, 6) an den Führungsmitteln anliegt, wobei die dabei auftretende Anlagekraft größer ist als in der Schließstellung des Einlaßventils (4, 6; 17, 6; 21, 6; 24, 6; 29, 6).

2. Rückschlagventil nach Anspruch 1, gekennzeichnet durch folgende Merkmale:

a) Zur Lagefixierung der Ventilfeder (7) bezüglich des Ventilkörpers (4) weist dieser eine der Ventilfeder (7) zugeordnete Stützfläche (14) und mindestens einen auf der Stützfläche (14) angeordneten Vorsprung (13) auf, der in die Ventilfeder (7) hineinragt;

b) der Vorsprung (13) ist exzentrisch zu der auf den Ventilkörper (4) wirkenden Angriffspunkt der Kraftresultierenden des Druckmittels angeordnet.

3. Rückschlagventil nach Anspruch 1, gekennzeichnet durch folgende Merkmale:

a) Zur Lagefixierung der Ventilfeder (7) bezüglich des Ventilkörpers (21) weist dieser an seinem der Ventilfeder (7) zugewandten Ende eine Vertiefung (20) oder Fixierelemente auf, in die die Ventilfeder (7) hineinragt und deren Grund durch eine Stützfläche (22) gebildet ist;

b) die Vertiefung (20) oder die Fixiermittel sind exzentrisch zu dem auf den Ventilkörper (21) wirkenden Angriffspunkt der Kraftresultierenden des Druckmittels angeordnet.

4. Rückschlagventil nach Anspruch 1, gekennzeichnet durch folgendes Merkmal:

Zur Lagefixierung der Ventilfeder (7) bezüglich des Ventilkörpers (17) weist dieser eine der Ventilfeder (7) zugewandte und zur Längsrichtung des Ventilkörpers (17) geneigt verlaufende Stützfläche (18) und mindestens einen auf der Stützfläche (18) konzentrisch zu dem auf den Ventilkörper (17) wirkenden Angriffspunkt der Kraftresultierenden des Druckmittels angeordneten Vorsprung (23) auf, der in die Ventilfeder (7) hineinragt.

5. Rückschlagventil nach Anspruch 1, gekennzeichnet durch folgende Merkmale:

a) Zur Lagefixierung der Ventilfeder (7) bezüglich des Ventilkörpers (29) weist dieser an seinem der Ventilfeder (7) zugewandten Ende eine Vertiefung (30) auf, in die die Ventilfeder (7) hineinragt;

b) die Vertiefung (30) weist eine zur Längsrichtung des Ventilkörpers (29) geneigt verlaufende Stützfläche (31) auf;

c) die Vertiefung (30) ist zentrisch zu dem auf den Ventilkörper (29) wirkenden Angriffspunkt der Kraftresultierenden des Druckmittels angeordnet.

6. Rückschlagventil nach Anspruch 1, gekennzeichnet durch folgende Merkmale:

a) Der Ventilkörper (24) weist eine Wirkfläche (25) auf, die zu dem Angriffspunkt der auf den Ventilköper (24) wirkenden Kraftresultierenden des Druckmittels exzentrisch angeordnet ist;

b) der Ventilkörper (24) weist im Bereich des extremen Endes seines Fortsatzes (10) eine dem Druckmittel zugewandte Fläche (26) auf, die bezüglich der Wirkfläche (25) in gleicher Richtung exzentrisch zu dem auf den Ventilkörper (24) wirkenden Angriffspunkt der Kraftresultierenden des Druckmittels angeordnet ist;

c) der Ventilkörper (24) weist Führungsmittel (27, 28) in Form mindestens eines Vorsprungs (27) oder einer Vertiefung (28) auf, durch die die Feder (7) bezüglich des Ventilkörpers (24) so angeordnet ist, daß in der Offenstellung des Einlaßventils (24, 6) ihre Kraftwirklinie zu dem Angriffspunkt der Kraftresultierenden des Druckmittels geneigt ist.

**Claims**

1. Non-return valve, especially for compressed air, having the following features:

a) an inlet valve formed by a valve seat (6) and by a valve body (4, 17, 21, 24, 29) is provided;

b) guide means are provided for guiding the valve body or an extension located on the valve body, the valve body being longitudinally movable substantially in the direction of the longitudinal axis of the opening of the inlet valve;

c) a valve spring (7) acting on the valve body is provided by means of which the valve body is biased towards the valve seat; characterised by the following features:

d) the valve spring (7) is so arranged relative to the valve body (4, 17, 21, 24, 29) that the centre of action of its line of action of force on the valve body is displaced relative to the centre of action of the resultant forces, acting on the valve body, of the pressure medium, or its line of action of force is inclined relative to the line of action of force of the mentioned resultant forces;

e) the guide means are so arranged and are in such a form that the valve body (4, 17, 21, 24, 29), or the extension (10), rests on the guide means when the inlet valve (4, 6; 17, 6; 21, 6; 24, 6; 29, 6) is open, the contact force that occurs being greater than that occurring when the inlet valve (4, 6; 17, 6; 21, 6; 24, 6; 29, 6) is closed.

2. Non-return valve according to claim 1, characterised by the following features:

a) in order to locate the valve spring (7) in position relative to the valve body (4), the latter has a support face (14) associated with the valve spring (7), and at least one projection (13) which is arranged on the support face (14) and projects into the valve spring (7);

b) the projection (13) is arranged eccentrically relative to the centre of action, acting on the valve body (4), of the resultant forces of the pressure medium.

3. Non-return valve according to claim 1, characterised by the following features:

a) in order to locate the valve spring (7) in position relative to the valve body (21), the latter has at its end facing the valve spring (7) a recess (20) or locating members into which the valve spring (7) projects and the base of which is formed by a support face (22);

b) the recess (20) or the locating means are arranged eccentrically relative to the centre of action, acting on the valve body (21), of the resultant forces of the pressure medium.

4. Non-return valve according to claim 1, characterised by the following feature:

in order to locate the valve spring (7) in position relative to the valve body (17), the latter has a support face (18) facing the valve spring (7) and inclined in the longitudinal direction of the valve body (17), and at least one projection (23) which is arranged on the support face (18) concentrically relative to the centre of action, acting on the valve body (17), of the resultant forces of the pressure medium and which projects into the valve spring (7).

5. Non-return valve according to claim 1, characterised by the following features:

a) in order to locate the valve spring (7) in position relative to the valve body (29), the latter has at its end facing the valve spring (7) a recess (30) into which the valve spring (7) projects;

b) the recess (30) has a support face (31) which is inclined in the longitudinal direction of the valve body (29);

c) the recess (30) is arranged centrically relative to the centre of action, acting on the valve body (29), of the resultant forces of the pressure medium.

6. Non-return valve according to claim 1, characterised by the following features:

a) the valve body (24) has a working face (25) which is arranged eccentrically relative to the centre of action of the resultant forces, acting on the valve body (24), of the pressure medium;

b) the valve body (24) has, in the region of the extreme end of its extension (10), a face (26) which faces the pressure medium and is arranged eccentrically in the same direction as the working face (25) relative to the centre of action, acting on the valve body (24), of the resultant forces of the pressure medium;

c) the valve body (24) has guide means (27, 28) in the form of at least one projection (27) or a recess (28), by means of which the spring (7) is so arranged relative to the valve body (24) that, when the inlet valve (24, 6) is open, its line of action of force is inclined relative to the centre of action of the resultant forces of the pressure medium.

**Revendications**

**1.** Soupape de retenue, en particulier pour air comprimé, présentant les caractéristiques suivantes :

a) il est prévu une soupape d'admission formée par un siège de soupape (6) et un corps de soupape (4, 17, 21, 24, 29) ;

b) il est prévu des moyens de guidage pour le guidage du corps de soupape ou d'un prolongement situé sur le corps de soupape, le corps de soupape étant mobile longitudinalement sensiblement dans la direction de l'axe longitudinal du passage de la soupape d'admission ;

c) il est prévu un ressort de soupape (7) agissant sur le corps de soupape et par lequel le corps de soupape est pré-tendu contre le siège de soupape ;

caractérisée par les caractéristiques suivantes :

d) le ressort de soupape (7) est agencé par rapport au corps de soupape (4, 17, 21, 24, 29) de telle manière que le point d'application de sa ligne d'action des forces sur le corps de soupape est décalé par rapport au point d'application de la résultante des forces du fluide comprimé qui agit sur le corps de soupape ou que sa ligne d'action des forces est inclinée par rapport à la ligne d'action des forces de la résultante des forces citée ;

e) les moyens de guidage sont formés et agencés de telle manière que le corps de soupape (4, 17, 21, 24, 29) ou le prolongement (10) repose sur les moyens de guidage dans la position d'ouverture de la soupape d'admission (4, 6 ; 17, 6 ; 21, 6 ; 24, 6 ; 29, 6), la force d'appui qui apparaît alors étant plus grande que dans la position de fermeture de la soupape d'admission (4, 6 ; 17, 6 ; 21, 6 ; 24, 6 ; 29, 6).

**2.** Soupape de retenue selon la revendication 1, caractérisée par les caractéristiques suivantes :

a) pour la fixation de la position du ressort de soupape (7) par rapport au corps de soupape (4), celui-ci présente une surface de soutien (14) associée au ressort de soupape (7) et au moins une saillie (13) disposée sur la surface de soutien (14) et qui pénètre dans le ressort de soupape (7) ;

b) la saillie (13) est agencée de manière excentrée par rapport au point d'application de la résultante des forces du fluide comprimé qui agit sur le corps de soupape (4).

**3.** Soupape de retenue selon la revendication 1, caractérisée par les caractéristiques suivantes :

a) pour la fixation de la position du ressort de soupape (7) par rapport au corps de soupape (21), ce dernier présente à son extrémité tournée vers le ressort de soupape (7) un évidement (20) ou des éléments de fixation dans lesquels pénètre le ressort de soupape (7) et dont le fond est formé par une surface de soutien (22) ;

b) l'évidement (20) ou les moyens de fixation sont agencés de manière excentrée par rapport au point d'application de la résultante des forces du fluide comprimé qui agit sur le corps de soupape (21).

**4.** Soupape de retenue selon la revendication 1, caractérisée par la caractéristique suivante :

pour la fixation de la position du ressort de soupape (7) par rapport au corps de soupape (17), celui-ci présente une surface de soutien (18) tournée vers le ressort de soupape (7) et inclinée par rapport à la direction longitudinale du corps de soupape (17) et au moins une saillie (23) disposée sur la surface de soutien (18) de manière concentrique au point d'application de la résultante des forces du fluide comprimé qui agit sur le corps de soupape (17) et pénétrant dans le ressort de soupape (7).

**5.** Soupape de retenue selon la revendication 1, caractérisée par les caractéristiques suivantes :

a) pour la fixation de la position du ressort de soupape (7) par rapport au corps de soupape (29), celui-ci présente à son extrémité tournée vers le ressort de soupape (7) un évidement (30) dans lequel pénètre le ressort de soupape (7) ;

b) l'évidement (30) présente une surface de soutien (31) inclinée par rapport à la direction longitudinale du corps de soupape (29) ;

c) l'évidement (30) est disposé de manière centrée par rapport au point d'application de la résultante des forces du fluide comprimé qui agit sur le corps de soupape (29).

**6.** Soupape de retenue selon la revendication 1, caractérisée par les caractéristiques suivantes :

a) le corps de soupape (24) présente une surface active (25) qui est disposée de manière excentrée par rapport au point d'application de la résultante des forces du fluide comprimé qui agit sur le corps de soupape (24) ;

b) le corps de soupape (24) présente dans le domaine de l'extrémité de son prolongement (10) une surface (26) tournée vers le fluide comprimé qui, par rapport à la surface active (25), est disposée de manière excentrée dans la même direction par rapport au point d'application de la résultante des forces du fluide comprimé qui agit sur le corps de soupape (24) ;

c) le corps de soupape (24) présente des moyens de guidage (27, 28) sous forme d'au moins une saillie (27) ou d'au moins un évidement (28) grâce auquel le ressort (7) est agencé par rapport au corps de soupape (24) de telle manière que, dans la position d'ouverture de la soupape d'admission (24, 6), sa ligne d'action des forces est inclinée par rapport au point d'application de la résultante des forces du fluide comprimé.

Fig. 2

Fig. 1

Fig. 3

Fig. 4

Fig. 5

Fig. 8

26

27

25

24

Fig. 7

10

26

31    30

28

24

10    29

25

10

26

Fig. 6

Fig. 9